# EUROPÄISCHE PATENTSCHRIFT

(11) **EP 1 941 964 B1**
(45) Veröffentlichungstag und Bekanntmachung des Hinweises auf die Patenterteilung: **24.03.2010**
(21) Anmeldenummer: 08000055.7
(22) Anmeldetag: 03.01.2008
(51) Int. Cl.: B23K 11/00, B23K 11/26

(54) **Widerstands-Einpressschweißverfahren**
Method for resistance pressure welding
Procédé de soudage par compression et résistance

(30) Priorität: 05.01.2007 DE 102007001790
(43) Veröffentlichungstag der Anmeldung: 09.07.2008
(73) Patentinhaber: GLAMAtronic Schweiß- und Anlagentechnik GmbH, 45966 Gladbeck (DE)
(72) Erfinder: Kniat, Hans-Josef, 44269 Dortmund (DE)
(74) Vertreter: Griepenstroh, Jörg

(56) Entgegenhaltungen:
- US-A- 2 202 405
- US-A1- 2005 127 044

## Beschreibung

Die Erfindung betrifft ein Widerstandspressschweißverfahren, d.h. ein Schweißverfahren, das ohne Zufuhr eines Zusatzwerkstoffs, jedoch unter Einbringung einer Anpresskraft auf die Schweißstelle durchgeführt wird.

Zu den konduktiven Widerstandspressschweißverfahren zählt das Widerstandsbuckelschweißen, bei welchem die zum Schweißen notwendige Stromdichte nicht durch Elektroden, sondern vielmehr durch die Bauteilform erzeugt wird. Es ist bekannt, ringförmige Bauteile über Ringbuckel miteinander zu verschweißen. Beim Buckelschweißen werden elektrischer Strom und Kraft den zu verbindenden Werkstücken durch ebene, großflächige Elektroden zugeführt. Die Buckelform bewirkt eine Stromkonzentration an der Fügestelle. Die Buckel werden durch die Elektrodenkraft und Erwärmung durch den Strom während des Schweißens weitgehend zurückgeformt und bilden an den Schweißstellen nicht lösbare Verbindungen. Das Widerstandsschweißen kann mit allen gängigen Stromarten erfolgen, d.h. mit Einphasen-Wechselstrom, Drei-Phasen-Gleichstrom, Mittelfrequenz und Kondensatorentladung. Wegen der geringen Wärmeeinbringung ist das Kondensatorentladungsschweißen vor allem für Präzisionsteile geeignet. Das Besondere am Kondensatorentladungsschweißen ist, dass die zum Schweißen erforderliche Energie nicht direkt dem Stromnetz entnommen wird, sondern einer Kondensatorbatterie, die als Energiespeicher in der Zeit zwischen den Schweißungen geladen wird. Bedingt durch die kurze Schweißzeit von nur ca. 10 ms wird die Energie nur auf die Schweißzone konzentriert. Das Kondensatorentladungsschweißen wird durch zwei Parameter gekennzeichnet, nämlich die Schweißenergie und die Schweißkraft, die auf die zu verschweißenden Teile abgestimmt und eingestellt werden müssen.

Beim Ringbuckelschweißen liegt der Abschmelzweg typischerweise zwischen 0,4 - 0,7 mm, wobei die Buckelhöhe um mehr als 0,2 mm höher als der Abschmelzweg gewählt werden sollte. Hierdurch wird verhindert, dass die miteinander zu verschweißenden Teile schon während der Schweißung auf Block kommen und die Schweißkraft für den Buckel abgefangen wird. Das aufgeschmolzene Material könnte anderenfalls mangels Anpresskraft überhitzt und herausgeschleudert werden. Wenn eine besonders spaltarme Verschweißung durchgeführt werden soll, so sind Ringbuckelgeometrien zu wählen, die hinterschnitten sind, um eine Vertiefung zu bilden, in welche das aufschmelzende Material ausweichen kann. Es ist auch bekannt, Ringkanten auf diese Art und Weise miteinander zu verschweißen. Hierbei ist ein Teil mit einer Schrägschulter und das andere mit einer Bohrung oder Loch versehen, so dass sich die Teile selbst zentrieren. Im Bereich der Schrägschulter wird eine Schweißlinse ausgebildet.

Beim Buckelschweißverfahren wird das Material des Buckels auch seitwärts verdrängt, so dass zwischen den Teilen stets ein Spalt bleibt.

Um eine hohe Festigkeit, sowohl statisch wie dynamisch, der Bauteile zu erreichen, werden möglichst große Schweißbreiten angestrebt, wobei es bei den bekannten Buckelschweißverfahren für größeren Ringbuckeldurchmesser problematisch ist, größere Schweißbreiten als 2 mm zu erzielen.

Wenn eine Schweißbreite von 2 mm oder weniger nicht ausreicht, weil auf Grund dynamischer oder schwingender Belastung der Bauteile ein Versagen befürchtet wird, kann alternativ das Laser- oder Elektronenstrahlschweißen zum Einsatz kommen. Hierbei werden die beiden zu verschweißenden Bauteile ineinander gepresst und anschließend von der Stirnseite her mittels eines Schweißstrahls umlaufend verschweißt. Durch dieses Verfahren sind Schweißtiefen von 3 - 3,5 mm und theoretisch auch deutlich mehr zu erzielen. Nachteilig beim Strahlschweißen ist die punktförmige Einbringung der Energie. Das Teil wird umlaufend nicht gleichzeitig verschweißt. Ebenfalls nachteilig sind die hohen Energieverbrauchs- und Instandhaltungskosten.

Aus der US 2 202 405 ist ein Widerstands-Einpressschweißverfahren bekannt, bei welchem ein Innenteil, das gegenüber einer Öffnung in einem Außenteil ein Übermaß aufweist, an die Mündung der Öffnung gepresst wird. Über die aneinander gepressten Kontaktflächen des Innenteils und des Außenteils wird ein Schweißstrom geleitet, so dass die Kontaktflächen aufschmelzen und das Innenteil in die Öffnung gepresst werden kann.

Die US-A-2005 0127044 offenbart ein Widerstands-Einpressschweißverfahren, bei welchem zwei Bauteile unter Übermaß aneinander gepresst werden. Die aneinander gepressten Kontaktflächen leiten einen Schweißstrom, so dass die Kontaktflächen aufschmelzen und die parallel zueinander angeordneten und parallel zur Einpressrichtung verlaufenden Mantelflächen verschweißt werden. Zum Verschweißen müssen die Bauteile sehr präzise aneinander ausgerichtet werden, da eine nachträgliche Justierung unmöglich ist.

Der Erfindung liegt die Aufgabe zu Grunde, ein Widerstandspressschweißverfahren dahingehend zu verbessern, dass kein Spalt zwischen den Teilen entsteht und gleichzeitig eine größere Schweißtiefe erzielt wird als beim Buckelschweißverfahren.

Diese Aufgabe ist bei einem Widerstands-Einpressschweißverfahren mit den Merkmalen des Patentanspruchs 1 gelöst.

Vorteilhafte Weiterbildungen des Verfahrens sind Gegenstand der Unteransprüche.

Bei dem erfindungsgemäßen Verfahren wird ein erstes Teil, das auch als Innenteil bezeichnet werden kann und das gegenüber einer Öffnung in einem zweiten Teil (Außenteil) ein Übermaß aufweist, an die Mündung der Öffnung gepresst. Dann wird über die aneinander gepressten Kontaktflächen des ersten Teils und des zweiten Teils ein Schweißstrom geleitet, so dass die Kontaktflächen aufschmelzen und das erste Teil tiefer in die Öffnung gepresst werden kann. Wesentlich bei dem erfindungsgemäßen Verfahren ist, dass die parallel zur Einpressrichtung verlaufenden Mantelflächen der Öffnung und des ersten Teils verschweißt werden. Der Materialüberschuss, der durch das Übermaß zwischen erstem Teil und zweitem Teil vorhanden ist, wird bei diesem Verfahren aufgeschmolzen, so dass keine stirnseitige, sondern eine längsseitige Verschweißung zwischen dem zweiten Teil und dem ersten Teil erfolgt. Die Bauteile werden ausschließlich translatorisch bewegt.

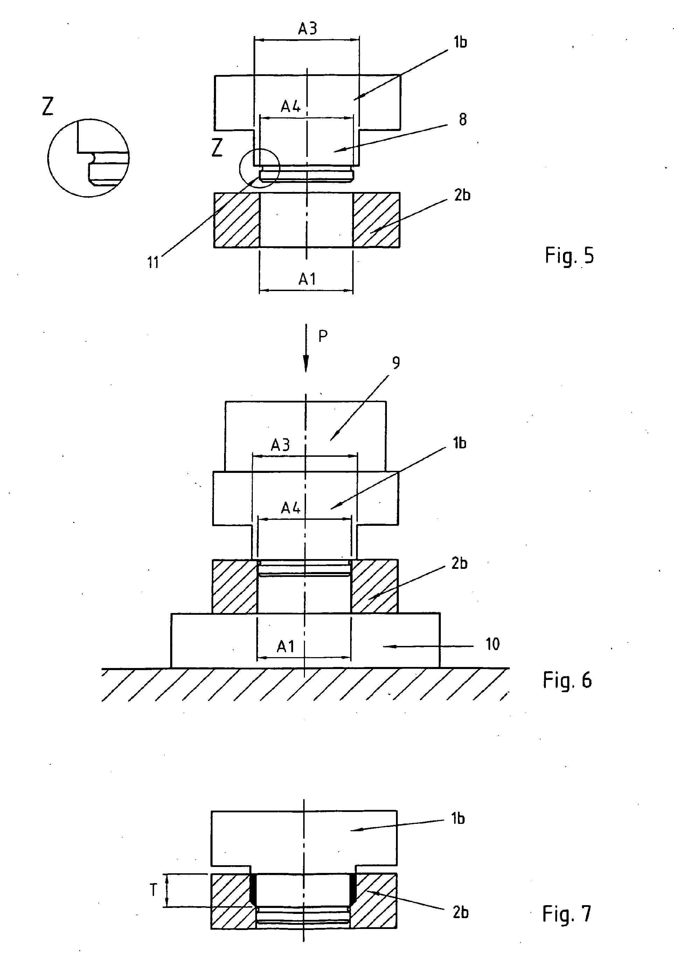

Ein Vorteil ist die einfache Positionierung der Teile ohne aufwendige Vorrichtungen. Die Teile sind selbstzentrierend und die Fügegenauigkeit kann durch einen Passansatz bei der Ausführung Fig. 5 - Fig. 7 verbessert werden.

Das erfindungsgemäße Verfahren ist ein Impulsschweißverfahren, bei welchem der Hochstromimpuls über eine transformierte Kondensatorentladung erzeugt wird. Mit diesem Verfahren lassen sich hohe Schweißtiefen bei geringer Spritzerneigung erzielen. Die Kerbwirkungen hinsichtlich dynamischer Beanspruchungen sind wesentlich geringer als beim herkömmlichen Buckelschweißen. Zugleich lassen sich bei einfacherer Herstellbarkeit hohe Festigkeiten bei gleichzeitig genauer Passung ohne Bereitstellung aufwändiger Vorrichtungen erreichen.

Theoretisch kann die Öffnung im zweiten Teil jede beliebige Geometrie aufweisen. Vorzugsweise handelt es sich bei der Öffnung jedoch um eine Bohrung, so dass die Mantelflächen des zweiten Teils und des ersten Teils als Zylindermantelflächen ausgebildet sind. Die Zylindermantelflächen können auch Unterbrechungen aufweisen.

Eine Anfasung an der Mündung der Öffnung oder an dem einzuschweißenden ersten Teil erleichtert die Selbstzentrierung der miteinander zu verschweißenden Bauteile.

Ein wesentlicher Vorteil des erfindungsgemäßen Verfahrens ist, dass die in Einpressrichtung gemessene Tiefe der Schweißnaht wesentlich größer als 2 mm sein kann und z.B. 3 - 6 mm betragen kann. Gleichzeitig wird ein Schweißspalt zwischen den Bauteilen vermieden, was insbesondere beim Verschweißen von torsionsbelasteten Bauteilen, wie z.B. Getriebebauteilen und Zahnrädern, gegenüber der bisherigen Vorgehensweise des Buckelschweißens zu einer höheren statischen und dynamischen Festigkeit führt. Bei dem ersten Teil und dem zweiten Teil handelt es sich insbesondere um Getriebebauteile, wie beispielsweise Gangrad und Synchronring. Mit dem erfindungsgemäßen Verfahren können insbesondere größere Querschnittsbereiche miteinander verschweißt werden, wobei die Schweißtiefe höher als die Schweißbreite sein kann. Im Vergleich zum Laser- oder Elektronenstrahlschweißen ist das Widerstandsschweißen, und hierbei insbesondere das Kondensatorentladungsschweißen, eine wesentlich günstigere Lösung. Ein entscheidender Vorteil des Widerstands-Einpressschweißverfahrens ist, dass die Eindringtiefe und damit die Schweißtiefe, abgesehen von der Geometrie, von den Parametern Kraft und Strom abhängt. Durch nur zwei Einstellparameter ist ein eindeutiger Zusammenhang zwischen dem zu verschweißenden Werkstoffvolumen gegeben. Die Wiederholgenauigkeit der Schweißparameter ist sehr hoch, was die Qualitätsüberwachung des Schweißprozesses vereinfacht. Des Weiteren erfolgt die Schweißung auf dem gesamten Mantelbereich gleichzeitig, wohingegen beim Laserstrahlschweißen ein zeitlicher Ablauf gegeben ist. Hierdurch ergeben sich mehrere Vorteile, wie zum Beispiel eine hohe Schweißtaktfolge bei gleichzeitig geringem Wartungsaufwand für die Maschine.

Die Erfindung wird nachfolgend anhand der in den Zeichnungen dargestellten Ausführungsbeispiele der Figuren 5 - 7 näher erläutert. Die Figuren 1 - 4 dienen lediglich zur Illustrierung der Erfindung und sind nicht Ausführungsformen der Erfindung, für die Schutz begehrt wird. Es zeigen:
- Figur 1: ein scheibenförmiges erstes Teil, das mit einem ringförmigen zweiten Teil verschweißt werden soll;
- Figur 2: eine weitere Kombination von Bauteilen, die miteinander verschweißt werden sollen;
- Figur 3: die Bauteile der Figur 2 in einer Schweißvorrichtung sowie
- Figur 4: die miteinander verschweißten Bauteile aus Figur 2.
- Figur 5: eine weitere Kombination von Bauteilen mit einem Zentrieransatz, die miteinander verschweißt werden sollen;
- Figur 6: die Bauteile der Figur 5 in einer Schweißvorrichtung sowie
- Figur 7: die miteinander verschweißten Bauteile aus Figur 5.

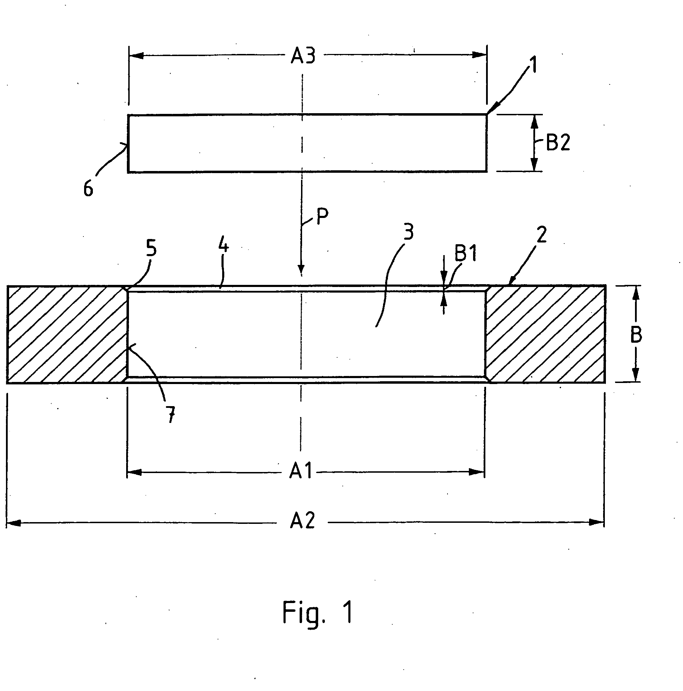

Figur 1 zeigt beispielhaft ein ringförmiges erstes Teil (Innenteil) 1, das mit einem zweiten Teil (Außenteil) 2 verschweißt werden soll. Die Bauteile bestehen aus einem für Getriebebauteile üblichen Stahlwerkstoff. Es ist zu erkennen, dass die Öffnung 3 im Bereich ihrer Mündung 4 eine Fase 5 aufweist. Der Winkel der Fase 5 kann beispielsweise 30° betragen. Das zweite Teil 2 wurde in einer Versuchsreihe mit ersten Teilen unterschiedlicher Außendurchmesser verschweißt, wobei die zweiten Teile 2 während der Versuchsreihe grundsätzlich die gleichen Abmessungen hatten, nämlich einen Innendurchmesser A1 der Öffnung 3 von 66 mm; Außendurchmesser A2 90 mm; Breite B des zweiten Teils 2 17 mm; Breite B1 der Fase 5 1 mm. Das erste Teil 1 hatte eine konstante Breite B2 von 10 mm.

Während des Versuchs wurde das erste Teil 1 in Richtung des eingezeichneten Pfeils P an die Mündung 4, d.h. die Fase 5 des zweiten Teils 2, gepresst. Während des Schweißens werden die Mantelflächen 6, 7 aufgeschmolzen und miteinander verschweißt. Die Schweißkraft betrug bei diesem Versuch 80 kN. Der eingeleitete Schweißstrom betrug 425 kA bei Stromzeiten von 8,1 ms. Insgesamt wurde eine Schweißenergie von 48 kJ eingeleitet. Bei einem Außendurchmesser A3 von 66,6 mm ergab sich eine Breite der Schweißnaht von 2,8 mm.

Bei der Bruchprüfung konnte das erste Teil von dem zweiten Teil erst durch eine Ausdrückkraft von 240 kN durch Zerstörung der Schweißnaht getrennt werden. Es hat sich gezeigt, dass ähnlich feste Verbindungen auch bei Außendurchmessern A3 von 66,45 mm, 66,50 mm und 66,55 mm, erreicht werden.

Bei einer ähnlichen Schweißung, bei welcher ein symmetrischer Ringbuckel mit einem Durchmesser von 60 mm zum Einsatz kommt, wurden bei einer Schweißkraft von 60 kN und einem Schweißstrom von 415 kA im Rahmen der Bruchprüfung lediglich Werte von 120 kN bezüglich der Ausdrückkraft erreicht, d.h., dass die über die Ringbuckel stirnseitig verschweißten Bauteile einer etwa halb so großen Ausdrückkraft standhalten wie die Bauteile, deren zylindrische Mantelflächen mit dem erfindungsgemäßen Verfahren verschweißt worden sind.

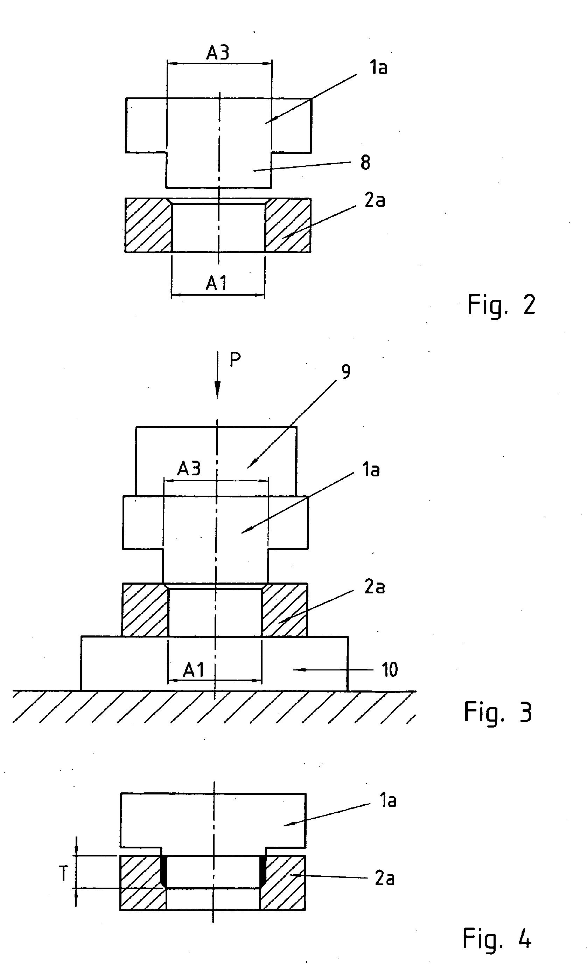

Die Figuren 2 bis 4 zeigen die Fertigungsfolge des erfindungsgemäßen Verfahrens in drei Schritten. Das erste Teil 1a soll wiederum mit dem zweiten Teil 2a verschweißt werden. Der Innendurchmesser A1 des zweiten Teils 2a ist kleiner als der Außendurchmesser A3 des ersten Teils 1a. Der Unterschied zwischen den Durchmessern beträgt zwischen 0,1 und 1,0 mm. Der Außendurchmesser A3 des ersten Teils 1a bezieht sich selbstverständlich nur auf denjenigen Bereich, der mit dem zweiten Teil 2a verschweißt werden soll, d.h. auf einen zylindrischen Stutzen 8. Die weitere Geometrie des ersten Teils 1a spielt keine Rolle, sofern hinreichend große Anlageflächen für die Elektroden 9, 10 vorhanden sind, wie sie in Figur 3 dargestellt sind. Die in der Bildebene der Figur 3 obere Elektrode 9 dient zur Einleitung des Schweißstroms in das erste Teil 1a und darüber hinaus zur Einleitung der Schweißkraft in Richtung des Pfeils P. Die untere Elektrode 10 dient als Widerlager für das zweite Teil 2a.

Nach dem Verschweißen ergibt sich ein Bauteil, wie es beispielhaft in Figur 4 dargestellt ist. Durch die Anfasung des zweiten Teils 2a hat sich eine einwandfreie Zentrierung des ersten Teils 1a ergeben. Die Eindringtiefe T kann daher theoretisch in Bereichen größer als 3 mm liegen.

Die Figuren 5 bis 7 zeigen eine weitere Variante für die Fertigungsfolge des erfindungsgemäßen Verfahrens in drei Schritten. Diese Ausführung dient der besseren Positionierung der Teile. Hierbei hat das erste Teil 1a einen Zentrieransatz 11 mit dem Außendurchmesser A4. Der Durchmesser A4 zentriert sich im Innendurchmesser A1 des zweiten Teils 2b. Durchmesser A4 und A1 werden als übliche Passung ausgelegt. Bei dieser Ausführung kann auf die Fase 5 am Durchmesser A1 des zweiten Teils 2b verzichtet werden.

### Bezugszeichen:

- 1 -: erstes Teil
- 1a -: erstes Teil
- 1b -: erstes Teil
- 2 -: zweites Teil
- 2a -: zweites Teil
- 2b -: zweites Teil
- 3 -: Öffnung
- 4 -: Mündung
- 5 -: Fase
- 6 -: Mantelfläche
- 7 -: Mantelfläche
- 8 -: Stutzen
- 9 -: Elektrode
- 10 -: Elektrode
- 11 -: Zentrieransatz

- A1 -: Innendurchmesser
- A2 -: Außendurchmesser
- A3 -: Außendurchmesser
- A4 -: Außendurchmesser
- B -: Breite
- B1 -: Breite
- B2 -: Breite
- P -: Einpressrichtung
- T -: Schweißtiefe

## Patentansprüche

1. Widerstands-Einpressschweißverfahren, bei welchem ein erstes Teil (1, 1a, 1 b), das gegenüber einer Öffnung (3) in einem zweiten Teil (2, 2a, 2b) ein Übermaß aufweist, an die Mündung (4) der Öffnung (3) gepresst wird, wobei über die aneinander gepressten Kontaktflächen des ersten Teils (1, 1 a, 1b) und des zweiten Teils (2, 2a, 2b) ein Schweißstrom geleitet wird, so dass die Kontaktflächen aufschmelzen und das erste Teil (1, 1a, 1b) in die Öffnung (3) gepresst werden kann, wobei die parallel zur Einpressrichtung (P) verlaufenden Mantelflächen (6, 7) der Öffnung (3) und des ersten Teils (1, 1 a, 1 b) verschweißt werden, **dadurch gekennzeichnet, dass** ein Hochstromimpuls über eine transformierte Kondensatorentladung erzeugt wird und wobei am ersten Teil (1b) ein Zentrieransatz (11) mit dem Durchmesser (A1) des zweiten Teils (2a, 2b) vorhanden ist.

2. Verfahren nach Anspruch 1, **dadurch gekennzeichnet, dass** die Mantelflächen (6, 7) als Zylindermantelflächen ausgebildet sind.

3. Verfahren nach Anspruch 1 oder 2, **dadurch gekennzeichnet, dass** die Mündung (4) und/oder das erste Teil (1, 1a) angefast ist.

4. Verfahren nach einem der Ansprüche 1 bis 3, **dadurch gekennzeichnet, dass** die die in Einpressrichtung gemessene Tiefe T der Schweißnaht größer als 2 mm ist.

5. Verfahren nach einem der Ansprüche 1 bis 4, **dadurch gekennzeichnet, dass** das Übermaß in einem Bereich von 0,1 mm bis 1,0 mm liegt.

## Claims

1. Method for resistance pressure welding, in which a first part (1, 1 a, 1b), which has an overdimension with respect to an opening (3) in a second part (2, 2a, 2b), is pressed onto the mouth (4) of the opening (3), whereupon a welding current is conducted via the pressed-together contact areas of the first part (1, 1a, 1b) and of the second part (2, 2a, 2b), so that the contact areas melt and the first part (1, 1a, 1b) can be pressed into the opening (3), welding together the outer surfaces (6, 7) of the opening (3) and of the first part (1, 1a, 1b) running parallel to the direction of pressure (P), **characterised in that** a high-current pulse is generated via a transformed capacitor discharge and a centring shoulder (11) with the same diameter (A1) as the second part (2a, 2b) is present on the first part (1 b).

2. Method according to claim 1, **characterised in that** the outer surfaces (6, 7) are in the form of cylinder outer surfaces.

3. Method according to claim 1 or 2, **characterised in that** the mouth (4) and/or the first part (1, 1a) is/are bevelled.

4. Method according to one of claims 1 to 3, **characterised in that** the depth T of the welding seam, measured in the direction of pressure, is greater than 2 mm.

5. Method according to one of claims 1 to 4, **characterised in that** the overdimension lies within a range of 0.1 mm to 1.0 mm.

## Revendications

1. Procédé de soudage par compression et résistance, pour lequel un premier élément (1, 1a, 1b) qui présente une surmesure par rapport à une ouverture (3) dans un second élément (2, 2a, 2b), est pressé contre la bouche (4) de l'ouverture (3), un courant de soudage étant conduit par les surfaces de contact pressées les unes contre les autres du premier élément (1, 1a, 1b) et du second élément (2, 2a, 2b) de sorte que les surfaces de contact fusionnent et le premier élément (1, 1a, 1b) puisse être pressé dans l'ouverture (3), les surfaces enveloppes (6, 7) de l'ouverture (3) et du premier élément (1, 1a, 1b) s'étendant parallèlement au sens de compression (P) étant soudées, **caractérisé en ce qu'**une impulsion à courant élevé est générée par une décharge à condensateur transformée et sur le premier élément (1b) étant présent un rebord de centrage (11) présentant le diamètre (A1) du second élément (2a, 2b).

2. Procédé selon la revendication 1, **caractérisé en ce que** les surfaces enveloppes (6, 7) sont réalisées comme des surfaces enveloppes de cylindre.

3. Procédé selon la revendication 1 ou 2, **caractérisé en ce que** la bouche (4) et/ou le premier élément (1, 1a) est biseauté.

4. Procédé selon l'une quelconque des revendications 1 à 3, **caractérisé en ce que** la profondeur T mesurée dans le sens de compression du cordon de soudure est supérieure à 2 mm.

5. Procédé selon l'une quelconque des revendications 1 à 4, **caractérisé en ce que** la surmesure se trouve dans une plage comprise entre 0,1 et 1 mm.
